# EUROPÄISCHE PATENTSCHRIFT

(11) **EP 1 714 733 B1**
(45) Veröffentlichungstag und Bekanntmachung des Hinweises auf die Patenterteilung: **14.11.2007**
(21) Anmeldenummer: 05008637.0
(22) Anmeldetag: 20.04.2005
(51) Int. Cl.: B23Q 11/00

(54) **Staubabsaugeinrichtung**
Dust suction device
Dispositif d'aspiration des poussières

(43) Veröffentlichungstag der Anmeldung: 25.10.2006
(73) Patentinhaber: Metabowerke GmbH, 72622 Nürtingen (DE)
(72) Erfinder: Erkan, Dilaver, 72631 Aichtal-Grötzingen (DE)
(74) Vertreter: Friz, Oliver

(56) Entgegenhaltungen:
- DE-A1- 3 113 913
- DE-A1- 10 115 116
- DE-B1- 2 233 125

## Beschreibung

Die Erfindung betrifft eine Staubabsaugeinrichtung zur lösbaren Anbringung an einem motorischen Handwerkzeuggerät, mit einem einen Ankopplungsbereich an das Handwerkzeuggerät aufweisenden Gehäusekörper, mit einer Staubführungseinrichtung, um Staub in einem Saugluftstrom von einer Werkzeugansetzstelle zu einer Staubsammeleinrichtung zu führen, wobei die Staubführungseinrichtung einen gegenüber dem Gehäusekörper in Bearbeitungsrichtung bewegbaren Ansaugbereich umfasst, der über einen dieser Bewegung folgenden Faltenbalg mit dem Gehäusekörper verbunden ist.

Derartige Staubabsaugeinrichtungen sind beispielsweise bekannt aus DE 101 15 116 A1.

Eine gattungsgemäße Staubabsaugeinrichtung könnte beispielsweise eine Anschlussmöglichkeit für eine externe Saugeinrichtung, beispielsweise einen an sich üblichen Staubsauger, aufweisen, oder sie kann eine integrierte Gebläseeinrichtung und eine Staubsammeleinrichtung umfassen, so dass der Saugluftstrom durch die Staubsammeleinrichtung hindurch zu der Gebläseeinrichtung gesogen und von dort nach außerhalb geblasen wird.

Der vorliegenden Erfindung liegt die Aufgabe zugrunde, eine Staubabsaugeinrichtung der eingangs genannten Art zu schaffen, bei der die flexible Ausbildung der Staubführungseinrichtung in anderer Weise realisiert ist, als dies bislang vorgeschlagen wurde, wobei hierdurch die Bedienung und insbesondere die Wartung der Einrichtung vereinfacht werden soll.

Diese Aufgabe wird bei einer Staubabsaugeinrichtung der genannten Art erfindungsgemäß dadurch gelöst, dass der Faltenbalg eine Zugfeder umfasst, die den Faltenbalg in Längenrichtung zu kontrahieren sucht.

Es hat sich gezeigt, dass durch die Ausbildung des Faltenbalgs mit einer Zugfeder der Faltenbalg derart formstabilisiert werden kann, dass er selbsttragend genutzt werden kann, also nicht mehr in einem rohrförmigen Abschnitt angeordnet werden muss. Er kann freitragend zwischen dem Ansaugbereich der Staubführungseinrichtung und dem Gehäusekörper der Staubabsaugeinrichtung vorgesehen sein, was zahlreiche Vorteile mit sich bringt. Zum einen bedeutet dies eine Einsparung des genannten rohrförmigen Abschnitts und damit auch eine Gewichtsreduzierung. Es bietet aber auch den wesentlichen Vorteil einer freien Einsichtnahme auf den Faltenbalg. Es kann im Betrieb nicht ausgeschlossen werden, dass es im Zuge der Absaugung von scharfkantigem Bohrklein zu Beschädigungen des Faltenbalgs kommt, die seither oft längere Zeit unbemerkt blieben. Dies führt aber zu einer Herabsetzung der Saugleistung und zu einem unkontrollierten Eindringen von Bohrstaub und Schmutz in die betreffenden Komponenten, deren Leichtläufigkeit und Funktionsfähigkeit dadurch in Mitleidenschaft gezogen werden kann. Wenn der Faltenbalg hingegen durch eine Stabilisierung mittels einer Zugfeder freitragend eingesetzt wird, so lässt sich eine solche etwaige Beschädigung erkennen und reparieren.

Zur weitergehenden Stabilisierung des Faltenbalgs erweist es sich als vorteilhaft, wenn der Faltenbalg eine Hubhöhe von wenigstens 100 mm, insbesondere von wenigstens 120 mm aufweist.

Als besonders vorteilhaft erweist es sich, wenn die Länge des Faltenbalgs im kontrahierten Zustand zur Länge im expandierten Zustand des Faltenbalgs zwischen 0,15 und 0,3, insbesondere zwischen 0,2 und 0,25 liegt.

In Weiterbildung der Erfindung wird vorgeschlagen, dass der Faltenbalg an seiner Anbindung an den Ansaugbereich und/oder an seiner Anbindung an den Gehäusekörper drehbar gelagert ist, um eine Torsion der spiralförmigen Feder auszugleichen. Bevorzugt ist ein Anschlussstück innerhalb des Gehäusekörpers drehbar angeordnet.

Es erweist sich weiter als vorteilhaft, dass der Faltenbalg dadurch gebildet ist, dass die Feder mit einem Kunststoffmaterial, welches die Wandungen des Faltenbalgs bildet, umspritzt ist. Die Feder ist dadurch im Material der Wandung eingebettet. Es werden vorteilhafterweise nach innen liegende Faltungen in der Wandung gebildet, wobei die Feder in radial außen liegenden Faltungen angeordnet ist.

Es erweist sich auch als vorteilhaft, wenn der Faltenbalg innerhalb des Gehäusekörpers von parallel zu seiner Längserstreckung erstreckten Stegen, Rippen oder Stangen gestützt wird. Dies unterstützt den Faltbalg auch im ausgefahrenen Zustand und verleiht eine formstabilisierende Wirkung; diese Massnahme ist indessen nicht zwingend erforderlich.

Es wird des Weiteren vorgeschlagen, dass parallel zu dem Faltenbalg eine den Ansaugbereich der Staubführungseinrichtung gegenüber dem Gehäusekörper haltende und insbesondere auch zwangsführende Anordnung vorgesehen ist. Eine solche Anordnung kann teleskopierbar ausgebildet sein, also durch ineinander einfahrbare, insbesondere rohr- oder profilförmige Abschnitte gebildet sein, obschon dies nicht zwingend erforderlich ist.

Es erweist sich dann auch als vorteilhaft, dass die den Ansaugbereich haltende Anordnung in Richtung auf eine Werkzeugansetzstelle vorgespannt ist. Die Vorspannung sollte dabei derart sein, dass sie die entgegengesetzte Zugspannung, welche die Zugfeder innerhalb des Faltenbalgs ausübt, deutlich überwindet.

Es erweist sich weiter als vorteilhaft, wenn die den Ansaugbereich haltende Anordnung wenigstens einen gegenüber dem Gehäusekörper ausfahrbaren Abschnitt umfasst, in dessen Innerem eine Druckfeder vorgesehen ist. Dieser Abschnitt ist dann vorzugsweise weitgehend in den Gehäusekörper einfahrbar. Die Staubabsaugeinrichtung kann ein Mittel zum Fixieren der den Ansaugbereich haltenden Anordnung in eingefahrener Position umfassen, um den hierfür erforderlichen Platzbedarf möglichst gering zu halten, wenn die Staubabsaugeinrichtung nicht benötigt wird.
Es erweist sich dabei auch als vorteilhaft, wenn der Ansaugbereich einen insbesondere einstückig angeformten Stutzen für den Anschluss des Faltenbalgs aufweist.

Weitere Merkmale, Einzelheiten und Vorteile der Erfindung ergeben sich aus den beigefügten Patentansprüchen und aus der zeichnerischen Darstellung und nachfolgenden Beschreibung von Ausführungsformen der erfindungsgemäßen Staubabsaugeinrichtung. In der Zeichnung zeigt:

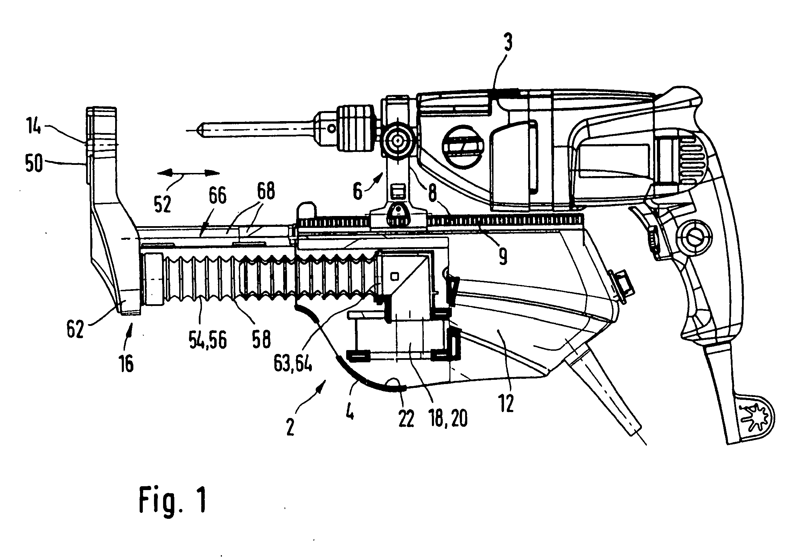

- Figur 1: eine Schnittansicht einer erfindungsgemäßen Staubabsaugeinrichtung im montierten Zustand an ein Handwerkzeuggerät.

Die Figur 1 zeigt eine Staubabsaugeinrichtung 2, die zur lösbaren Anbringung an einem motorischen Handwerkzeuggerät 3, im dargestellten Fall an einer Bohrmaschine, konzipiert ist. Die Staubabsaugeinrichtung 2 umfasst einen Gehäusekörper 4, der einen Ankopplungsbereich 6 mit Befestigungsmitteln 8 zum lösbaren Anbringen der Staubabsaugeinrichtung an dem Handwerkzeuggerät 3 umfasst. Die Befestigungsmittel 8 umfassen im dargestellten Fall eine Zahnstangenanordnung 9, mittels derer die Staubabsaugeinrichtung 2 relativ zum Hals der Bohrmaschine an variabler Position festlegbar ist.

Die Staubabsaugeinrichtung 2 weist eine elektromotorisch angetriebene Gebläseeinrichtung 12 auf, die einen Saugluftstrom erzeugt, der im Bereich einer Werkzeugansetzstelle 14 entstehenden Bohrstaub über eine teleskopierbare Staubführungseinrichtung 16 zu einer Staubsammeleinrichtung 18 transportiert. Der Saugluftstrom passiert die Staubsammeleinrichtung und wird über die Gebläseeinrichtung 12 nach außen befördert.

Die Staubsammeleinrichtung 18 umfasst einen Filter 20, der in einer Filteraufnahmekammer 22 des Gehäusekörpers 4 aufgenommen ist.

Vorzugsweise ist der Filter ein kartuschenartiger Filter mit einem allseitig umschlossenen Filterinnenraum. In diesen Filterinnenraum mündet die Staubführungseinrichtung 16. Der Saugluftstrom wird also in den Filterinnenraum geleitet, so dass sich darin mitgeführter Bohrstaub und Schmutz innerhalb des Filters 20 abscheidet und die Saugluft den Filter 20 nach außen durchströmt.

Die Staubführungseinrichtung 16 umfasst einen Ansaugbereich 50, der gegenüber dem Gehäusekörper 4 in der Bearbeitungsrichtung 52 bewegbar ist, also von dem Gehäusekörper 4 weg und auf den Gehäusekörper zu verstellbar ist.

Der Ansaugbereich 50 ist über einen Faltenbalg 54 mit dem Gehäusekörper 4 verbunden, wobei der Faltenbalg 54 einen flexiblen Abschnitt 56 der Staubführungseinrichtung 16 bildet.
Innerhalb des Faltenbalgs 54 ist eine Zugfeder 58 vorgesehen, die den Faltenbalg 54 in Längenrichtung zu kontrahieren sucht, also dahingehend, dass der Faltenbalg 54 in Richtung des Gehäusekörpers 4 eingefahren wird. Wie aus Figur 1 ersichtlich ist, ist der Faltenbalg 54 nicht von einem stabilisierenden Rohr umgeben, sondern er ist freitragend zwischen einem Anschlussstutzen eines den Ansaugbereich 50 bildenden Bauteils 62 und einem Anschlussmittel 63 innerhalb des Gehäusekörpers 4 vorgesehen. Dies ist möglich, weil der Faltenbalg 54 durch die kontrahierende Kraft der Zugfeder 58 formstabilisiert wird. Das genannte Anschlussmittel 63 ist im einfachsten Fall - wie dargestellt - ein Endstück 64, das innerhalb oder außerhalb des Faltenbalgs 54 vorgesehen ist oder gar einstückig mit dem Faltenbalg ausgebildet sein kann und gegenüber dem Gehäusekörper drehbar ist, um Torsionen der Zugfeder 58 ausgleichen zu können. Es ist indessen axial nach vorn fixiert, könnte aber auch beschränkt hin- und herbewegbar sein.

Das den Ansaugbereich 50 der Staubführungseinrichtung 16 bildende Bauteil 62 ist über eine Anordnung 66, die im Wesentlichen parallel zur Längserstreckung des Faltenbalgs 54 vorgesehen ist, an dem Gehäusekörper 4 gehalten. Die Anordnung 66 umfasst zwei teleskopierbare rohrförmige Abschnitte 68, die gegen eine Federvorspannung in den Gehäusekörper einfahrbar sind. Innerhalb der rohrförmigen Abschnitte 68 ist eine Druckfeder vorgesehen, welche die rohrförmigen Abschnitte 68 und den Ansaugbereich 50 in Richtung auf das zu bearbeitende Werkstück vorspannt. Die Vorspannung ist dabei größer als die Zugspannung der Feder 58 innerhalb des Faltenbalgs 54.

## Patentansprüche

1. Staubabsaugeinrichtung (2) zur lösbaren Anbringung an einem motorischen Handwerkzeuggerät, mit einem einen Ankopplungsbereich (6) an das Handwerkzeuggerät aufweisenden Gehäusekörper (4), mit einer Staubführungseinrichtung (16), um Staub in einem Saugluftstrom von einer Werkzeugansetzstelle (14) zu einer Staubsammeleinrichtung (18) zu führen, wobei die Staubführungseinrichtung (16) einen gegenüber dem Gehäusekörper (4) in Bearbeitungsrichtung (54) bewegbaren Ansaugbereich (50) umfasst, der über einen dieser Bewegung folgenden Faltenbalg (54) mit dem Gehäusekörper (4) verbunden ist, **dadurch gekennzeichnet, dass** der Faltenbalg (54) eine Zugfeder (58) umfasst, die den Faltenbalg (54) in Längenrichtung zu kontrahieren sucht.

2. Staubabsaugeinrichtung **gekennzeichnet durch** eine integrierte Gebläseeinrichtung (12), wobei der Saugluftstrom **durch** die Staubsammeleinrichtung (18) hindurch zu der Gebläseeinrichtung (12) gesogen wird.

3. Staubabsaugeinrichtung nach Anspruch 1 oder 2, **dadurch gekennzeichnet, dass** der Faltenbalg (54) eine Hubhöhe von wenigstens 100 mm, insbesondere von wenigstens 120 mm aufweist.

4. Staubabsaugeinrichtung nach Anspruch 1, 2 oder 3, **dadurch gekennzeichnet, dass** die Länge des Faltenbalgs im kontrahierten Zustand zur Länge im expandierten Zustand des Faltenbalgs zwischen 0,15 und 0,3, insbesondere zwischen 0,2 und 0,25 liegt.

5. Staubabsaugeinrichtung nach einem der vorstehenden Ansprüche, **dadurch gekennzeichnet, dass** der Faltenbalg (54) bei Erstreckung außerhalb des Gehäusekörpers (4) freiliegt.

6. Staubabsaugeinrichtung nach einem der vorstehenden Ansprüche, **dadurch gekennzeichnet, dass** der Faltenbalg (54) an seiner Anbindung an den Ansaugbereich (50) und/oder an seiner Anbindung an den Gehäusekörper (4) drehbar ist.

7. Staubabsaugeinrichtung nach einem der vorstehenden Ansprüche, **dadurch gekennzeichnet, dass** der Faltenbalg (54) dadurch gebildet ist, dass die Feder mit einem Kunststoffmaterial, welches die Wandungen des Faltenbalgs bildet, umspritzt ist.

8. Staubabsaugeinrichtung nach einem der vorstehenden Ansprüche, **dadurch gekennzeichnet, dass** parallel zu dem Faltenbalg (54) eine den Ansaugbereich (50) der Staubführungseinrichtung (16) gegenüber dem Gehäusekörper (4) haltende Anordnung (66) vorgesehen ist.

9. Staubabsaugeinrichtung nach Anspruch 8, **dadurch gekennzeichnet, dass** die den Ansaugbereich (50) haltende Anordnung (66) teleskopierbar ist.

10. Staubabsaugeinrichtung nach Anspruch 8 oder 9, **dadurch gekennzeichnet, dass** die den Ansaugbereich (50) haltende Anordnung (66) in Richtung auf eine Werkzeugansetzstelle (14) vorgespannt ist.

11. Staubabsaugeinrichtung nach Anspruch 8, 9 oder 10, **dadurch gekennzeichnet, dass** die den Ansaugbereich (50) haltende Anordnung (66) wenigstens einen gegenüber dem Gehäusekörper (4) ausfahrbaren Abschnitt (68) umfasst, in dessen Innerem eine Druckfeder vorgesehen ist.

12. Staubabsaugeinrichtung nach einem der vorstehenden Ansprüche, **dadurch gekennzeichnet, dass** der Ansaugbereich (50) einen Stutzen (60) für den Anschluss des Faltenbalgs (54) aufweist.

## Claims

1. Dust extraction device (2) for releasable attachment to a power hand tool comprising a housing body (4) having a region (6) for coupling to the hand tool, comprising a dust guiding device (16) in order to guide dust in a suction air current from a tool application point (14) to a dust collection device (18), the dust guiding device (16) comprising a suction region (50) which can be moved relative to the housing body (4) in the machining direction (54) and which is connected with the housing body (4) by way of bellows (54) which follow said movement, **characterised in that** the bellows (54) comprise an extension spring (58) which acts to contract the bellows (54) in the longitudinal direction.

2. Dust extraction device **characterised by** an integrated fan (12), the suction air current being sucked through the dust collection device (18) to the fan (12).

3. Dust extraction device according to either claim 1 or claim 2, **characterised in that** the bellows (54) have a stroke length of at least 100 mm, in particular of at least 120 mm.

4. Dust extraction device according to claim 1, claim 2 or claim 3, **characterised in that** the length of the bellows in the contracted state is between 0.15 and 0.3, in particular between 0.2 and 0.25, in relation to the length of the bellows in the expanded state.

5. Dust extraction device according to any one of the preceding claims, **characterised in that**, when extended, the bellows (54) are exposed outside the housing body (4).

6. Dust extraction device according to any one of the preceding claims, **characterised in that** the bellows (54) can be rotated at the connection thereof to the suction region (50) and/or at the connection thereof to the housing body (4).

7. Dust extraction device according to any one of the preceding claims, **characterised in that** the bellows (54) are formed as a result of the fact that the spring is coated with a plastics material which forms the walls of the bellows.

8. Dust extraction device according to any one of the preceding claims, **characterised in that** an arrangement (66) which holds the suction region (50) of the dust guiding device (16) relative to the housing body (4) is provided parallel to the bellows (54).

9. Dust extraction device according to claim 8, **characterised in that** the arrangement (66) which holds the suction region (50) is telescopic.

10. Dust extraction device according to either claim 8 or claim 9, **characterised in that** the arrangement (66) holding the suction region (50) is pre-tensioned in the direction of a tool application point (14).

11. Dust extraction device according to claim 8, claim 9 or claim 10, **characterised in that** the arrangement (66) holding the suction region (50) comprises at least a portion (68) which can be extended relative to the housing body (4) and in the interior of which a compression spring is provided.

12. Dust extraction device according to any one of the preceding claims, **characterised in that** the suction region (50) comprises a connecting piece (60) for connection to the bellows (54).

## Revendications

1. Dispositif d'aspiration des poussières (2) destiné à être monté de manière amovible sur un outil portable actionné par un moteur, comportant un corps formant carter (4), muni d'une zone de couplage (6) avec l'outil portable, un dispositif de guidage des poussières (16) pour acheminer les poussières dans un flux d'air d'aspiration depuis une zone d'attaque (14) de l'outil vers un collecteur de poussières (18), le dispositif de guidage des poussières (16) étant muni d'une zone d'aspiration (50), qui est mobile par rapport au corps formant carter (4) dans le sens d'usinage (52) et qui est relié au corps formant carter (4) par l'intermédiaire d'un soufflet (54) suivant ce mouvement, **caractérisé en ce que** le soufflet (54) comporte un ressort de traction (58), qui tente de contracter le soufflet (54) dans le sens longitudinal.

2. Dispositif d'aspiration des poussières **caractérisé par** une soufflerie (12) intégrée, le flux d'air d'aspiration étant aspiré à travers le collecteur de poussières (18) vers la soufflerie (12).

3. Dispositif d'aspiration des poussières selon la revendication 1 ou 2, **caractérisé en ce que** le soufflet (54) possède une hauteur de course de 100 mm au moins, en particulier de 120 mm au moins.

4. Dispositif d'aspiration des poussières selon la revendication 1, 2 ou 3, **caractérisé en ce que** la longueur du soufflet (54) à l'état contracté par rapport à la longueur à l'état expansé du soufflet (54) se situe entre 0,15 et 0,3, en particulier entre 0,2 et 0,25.

5. Dispositif d'aspiration des poussières selon l'une quelconque des revendications précédentes, **caractérisé en ce que** le soufflet (54) est dégagé lorsqu'il s'étend en dehors du corps formant carter (4).

6. Dispositif d'aspiration des poussières selon l'une quelconque des revendications précédentes, **caractérisé en ce que** le soufflet (54) est apte à tourner au niveau de son assemblage à la zone d'aspiration (50) et/ou au niveau de son assemblage au corps formant carter (4).

7. Dispositif d'aspiration des poussières selon l'une quelconque des revendications précédentes, **caractérisé en ce que** le soufflet (54) est formé par le fait que le ressort est surmoulé par une matière plastique qui forme les parois du soufflet.

8. Dispositif d'aspiration des poussières selon l'une quelconque des revendications précédentes, **caractérisé en ce que**, parallèlement au soufflet (54), il est prévu un agencement (66), qui maintient la zone d'aspiration (50) du dispositif de guidage des poussières (16) par rapport au corps formant carter (4).

9. Dispositif d'aspiration des poussières selon la revendication 8, **caractérisé en ce que** l'agencement (66), qui maintient la zone d'aspiration (50), est un agencement télescopique.

10. Dispositif d'aspiration des poussières selon la revendication 8 ou 9, **caractérisé en ce que** l'agencement (66), qui maintient la zone d'aspiration (50), est précontraint vers une zone d'attaque (14) de l'outil.

11. Dispositif d'aspiration des poussières selon la revendication 8, 9 ou 10, **caractérisé en ce que** l'agencement (66), qui maintient la zone d'aspiration (50), comporte au moins une partie (68), qui est extractible par rapport au corps formant carter (4) et à l'intérieur de laquelle est prévu un ressort de pression.

12. Dispositif d'aspiration des poussières selon l'une quelconque des revendications précédentes, **caractérisé en ce que** la zone d'aspiration (50) comporte une tubulure pour le raccordement du soufflet (54).
